# EUROPEAN PATENT SPECIFICATION

(11) **EP 4 203 279 B1**
(45) Date of publication and mention of the grant of the patent: **10.07.2024**
(21) Application number: 21217494.0
(22) Date of filing: 23.12.2021
(51) Int. Cl.: H02K 15/02, H02K 1/24, H02K 15/095

(54) **A ROTOR ASSEMBLY METHOD**
ROTORMONTAGEVERFAHREN
PROCÉDÉ D'ASSEMBLAGE DE ROTOR

(43) Date of publication of application: 28.06.2023
(73) Proprietor: Valeo eAutomotive Germany GmbH, 91056 Erlangen (DE)
(72) Inventor: WOLF, Nico, 97616 Bad Neustadt a.d.Saale (DE); SCHLERETH, Alexander, 97616 Bad Neustadt a.d.Saale (DE)
(74) Representative: Valeo Powertrain Systems

(56) References cited:
- EP-A2- 0 957 561
- JP-B2- 5 030 714
- US-A- 3 882 336
- US-A1- 2012 080 973
- US-A1- 2020 204 022

## Description

### FIELD OF THE INVENTION

The present invention belongs to the field of rotary electric machines configured to be on board of an automotive vehicle, such as an electric vehicle (EV) or a hybrid vehicle (HV).

The present invention relates, in particular, to the field of electric excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which needs to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor electric excited. This type of rotors is commonly referred as wound rotors or slip ring rotors. Such a rotor comprises a rotor body formed of a stack of laminations having a plurality of teeth projecting radially, and a field coil wound around each tooth of the teeth. The field coil is then connected to an external power supply through slip rings. The slip rings correspond to electro-mechanical devices configured to allow the exchange of electric power between the field coil, which rotates with the rotor, and the external power supply, which is fixed.

The rotary electric machine for the electric or hybrid vehicles, the rotor is designed to rotate at high speeds, which may affect the holding of the field coil due to centrifugal forces. If the field coil is not precisely and firmly wound on the teeth of the rotor body, a malfunction of the rotor may occur.

In this context, the main objective of the present invention is to provide a rotor assembly method allowing to precisely and firmly wind the field coil around each tooth of the teeth of the rotor.

Documents US 3 882 336 A, US 2020/204022 A1, EP 0 957 561 A2, US 2012/080973 A1 and JP 5 030714 B2 disclose manufacturing methods of the prior art.

### SUMMARY OF THE INVENTION

The present invention concerns a rotor assembly method comprising an assembly step, a compression step and a winding assembly and fixation step. The assembly step is configured to install on a rotor shaft of a rotor, a lamination package formed of a stack of laminations, wherein the stack of laminations comprises an inner portion and an outer portion which is, compared to the inner portion, more distant to the rotor shaft. The compression step consists of compressing the outer portion by an axial compression force to form a compressed outer portion. The winding assembly and fixation step comprises winding a field coil on the compressed outer portion, and removing the axial compression force after the field coil is wound.

Therefore, the rotor assembly method according to the present invention allows to precisely and firmly wind a field coil on a lamination package of the rotor body. Indeed, after a field coil is wound on the compressed outer portion, a pretension of the field coil is ensured and advantageously allows the field coil to be precisely and firmly wound on the lamination package of the rotor. The risk of mispositioning the field coil on the rotor body occurred in the rotor assembly phase or during operation of the rotor, is thus significantly reduced or completely avoided.

According to an embodiment, the compression step comprises applying the axial compression force on two axial ends of the outer portion.

Advantageously, the pressing device may not be in contact with two axial ends of the inner portion.

The lamination package comprises teeth projecting radially. Thus, the pretension of the field coil ensures that the field coil is correctly wound on each of the tooth of the teeth.

Preferably, the compression step comprises using a pressing device to apply the axial compression force; the pressing device being then removed after the winding assembly and fixation step.

Especially, the assembly and fixation step comprises using a pretension resulting from the axial compression force so that the field coil is precisely and firmly wound on the outer portion.

According to an embodiment, the rotor comprises end plates, and the end plates comprise each a pocket. Each of the pockets faces a tooth of the teeth of the stack of laminations, wherein the pocket is a cavity between the corresponding end plate and an area of an outer portion of the corresponding tooth belonging to the outer portion of the stack of laminations. Each tooth of the teeth corresponds to two end plates located at two axial sides of the tooth.

Preferably, the pressing device is a clamping device. The compression step comprises, for each tooth of the teeth, inserting in each of the pockets of the two end plates a pressing portion of the clamping device, and using the clamping device to apply the axial compression force on the areas of the outer portions of the tooth.

Furthermore, the present invention concerns a rotor being manufactured by using a rotor assembly method as mentioned above.

Preferably, the rotor is an electric excited rotor for an electrically excited synchronous motor (EESM).

According to an aspect of the invention, the invention relates to a rotary electric machine comprising the rotor as described previously and a stator.

Another aspect of the invention is an electric drive, comprising the rotary electric machine and an inverter configured to convert a direct current voltage coming from a high-voltage power supply battery into an alternating current voltage so as to drive the rotary electric machine. The AC voltage may be a multiphase AC voltage, especially a three-phase voltage.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
- Figure 1 illustrates a partial view of an example of a rotor according to an embodiment of the invention;
- Figures 2 to 4 illustrate a perspective view of a projection of a half of the rotor during each of steps of a rotor assembly method according to an embodiment of the invention;
- Figure 5 is a flowchart of the steps of the rotor assembly method according to an embodiment of the invention;
- Figure 6 illustrates using a clamping device to apply an axial compression force during a compression step of the rotor assembly method according to an embodiment of the invention; and
- Figure 7 is a schematic diagram of an automotive electric or hybrid vehicle comprising the rotor of a rotary electric machine according to an embodiment of the invention.

### DETAILED DESCRIPTION

Several embodiments of the present invention will be detailed hereafter with reference to the drawings. It will be apparent to those skilled in the art from this present disclosure that the following description of these embodiments of the present invention are provided for illustration only and not for the purpose of limiting the invention as defined by the appended claims and their equivalents.

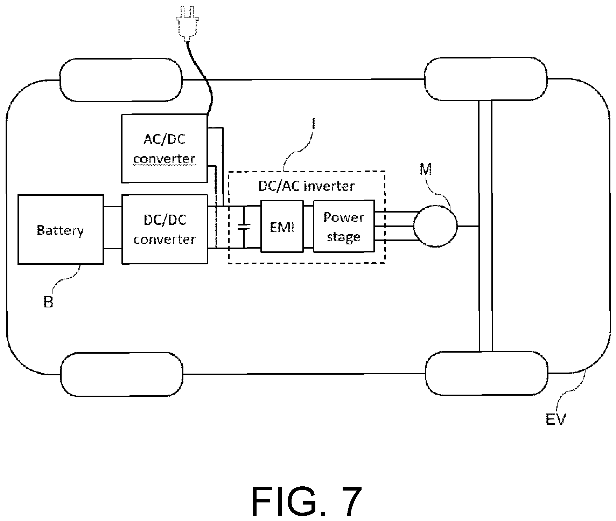

In reference to Figure 7, an aspect of the invention is an electric vehicle or a hybrid electric automotive vehicle (EV) comprising wheels and an electric drive configured to drive at least indirectly at least one of the wheels of the vehicle. The vehicle may comprise a high-voltage power supply battery B, preferably a rechargeable battery, for providing electric power to the electric drive. However, the invention is not limited to this domain.

Another aspect of the invention is the electric drive comprising a rotary electric machine (i.e., an electric motor) M and an inverter I configured to convert a direct current (DC) voltage coming from the high-voltage power supply battery B into an alternating current (AC) voltage in order to drive the rotary electric machine M. The rotary electric machine M may in particular be a three-phase rotary electric machine supplied with a three-phase AC voltage.

The invention also relates to the rotary electric machine comprising a stator, referring to a fixed part of the rotary electric machine, and a rotor, referring to a rotating part of the rotary electric machine. The rotor 1 is, preferably, an electric excited rotor, also commonly referred as a wound rotor or a slip ring rotor for an electrically excited synchronous motor (EESM). More precisely, the stator presents a cylinder shape and surrounds coaxially the rotor 1. Then, the rotary electric machine comprises a casing covering both the stator and the rotor 1. Ordinarily, the stator comprises a stator body formed of a stack of stator laminations having a plurality of stator teeth projecting radially, and stator windings wound around the stator teeth.

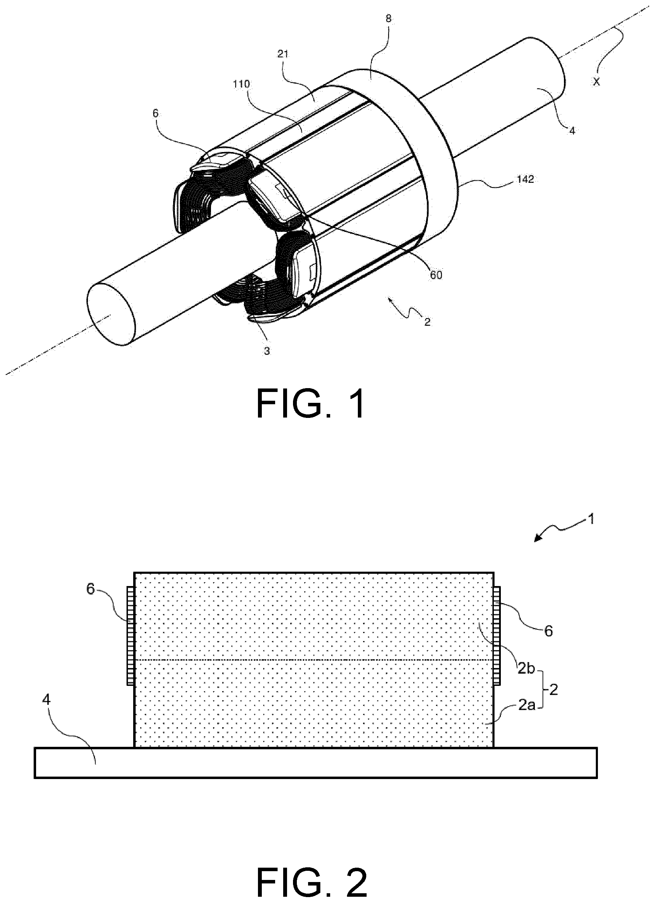

Figure 1 illustrates a partial view of an example of the rotor 1 according to a further aspect of the invention. The rotor 1 presents a shape of a cylinder and comprises a rotor shaft 4 configured to rotate around a rotation axis 1X, a rotor body 2 comprising a lamination package formed of a stack of laminations having a plurality of teeth 21 projecting radially, and at least one field coil 3 wound around each tooth of the teeth 21. A rotor assembly method 300 allowing to precisely and firmly wind the field coil 3 on the rotor body 2 (or more precisely, on the teeth 21 of the rotor 1), will be described in detail in the following paragraphs.

The laminations of the rotor body 2 are especially stacked along the rotation axis 1X. The invention is not limited to the number of teeth 21. The teeth 21 may notably comprise four, six, or eight teeth for example. The rotor body 2 is configured to be mounted coaxially on the rotor shaft 4, For instance, the rotor body 2 may be press-fitted on the rotor shaft 4. The rotor body 2 is for example made of steel or silicone steel.

The field coil 3 is then connected to an external power supply through at least one slip ring (not represented) mounted on the rotor shaft 4, namely on an axial end of the rotor shaft 4. The field coil 3 is preferably made of copper. The slip rings especially correspond to electro-mechanical devices configured to allow the exchange of electric power between a rotating element and a fixed element, here respectively the field coil 3 and the external power supply. The rotor 1 may further comprise a holder such that the slip rings are mounted on the rotor shaft 4 through the holder.

The rotor 1 may further comprise end plates 6, as represented in Figure 1, configured to come respectively against two axial ends of the rotor body 2. Only one of the two axial ends of the rotor body 2 is represented as "142" in Figure 1. The end plates 6 notably present an annular shape, substantially similar to the shape of the two axial ends of the rotor body 2 such that to be able to cover the two axial ends. Then, the field coil 3 advantageously passes over the end plates 6. In other words, the end plates 6 are located between the rotor body 2 and the coil ends of the field coil 3 such that to provide a mechanical holding of the stack of laminations and to electrically insulate axially the field coil 3 from the rotor body 2.

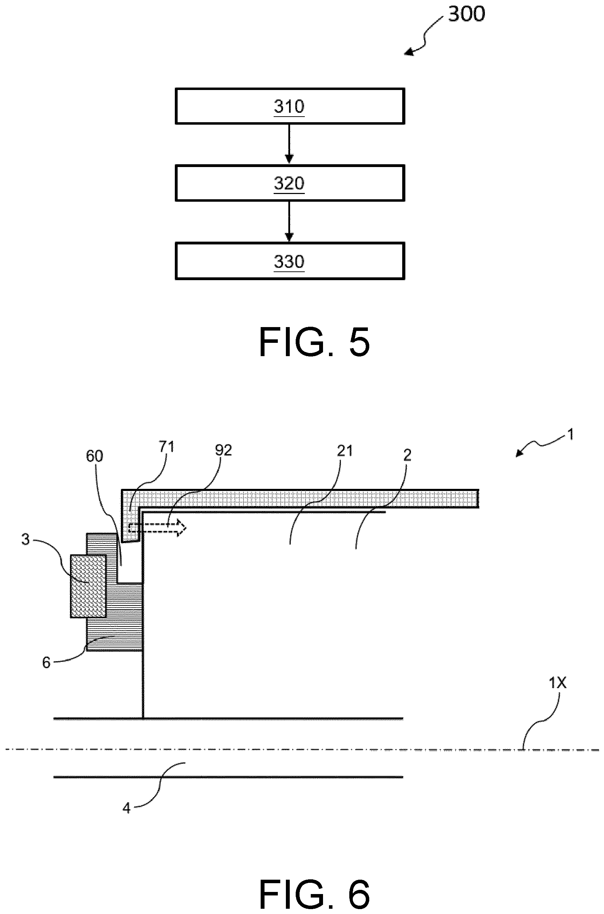

In the present embodiment, the end plates 6 comprise each a pocket 60 facing a tooth of the teeth 21 of the stack of laminations, as illustrated in Figures 1 and 6. Each tooth of the teeth 21 corresponds to two end plates 6 located at two axial sides of the tooth.

The rotor 1 further comprises wedge elements 110 extending axially and arranged in slots respectively located between two adjacent teeth of the teeth 21. Then, the slots are notably filled with a filling material, for instance a resin, so as to fixate the field coil 3. The field coil 3 is thus prevented from moving due to centrifugal forces during in-service life of the rotor 1. The rotor 1 advantageously comprises two end caps 8 coming against two axial ends of the rotor body 2.

Figures 2 to 4 illustrate a perspective view of a projection of a half of the rotor 1 during each of steps 310 to 330 of the rotor assembly method 300, according to an embodiment of the invention. Figure 5 is a flowchart of the steps 310 to 330 of the rotor assembly method 300 according to an embodiment of the invention.

The assembly step 310 is configured to install the stack of laminations of the rotor body 2 on the rotor shaft 4, as illustrated in Figure 2. The stack of laminations comprises an inner portion 2a and an outer portion 2b. Compared to the inner portion 2a, the outer portion 2b is more distant to the rotor shaft 4. The compressed outer portion 2b comprises the teeth 21 projecting radially. Preferably, the inner portion 2a presents a diameter substantially equal to a half of a diameter of the rotor body 2.

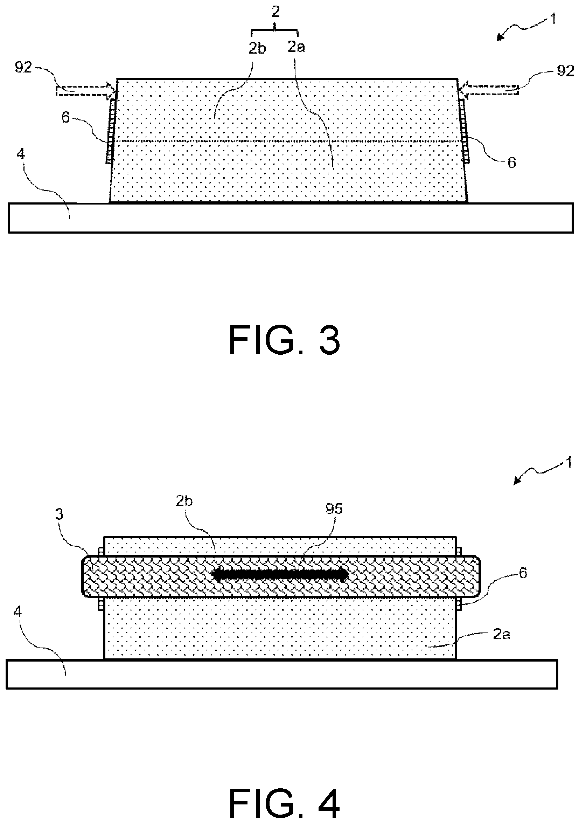

The compression step 320 consists of compressing the outer portion 2b by an axial compression force 92 to form a compressed outer portion 2b, and accordingly, a slightly fan-out inner portion 2a. A distance between two axial ends of the inner portion 2a is thus greater than a distance between two axial ends of the compressed outer portion 2b, as illustrated in Figure 3.

According to an embodiment, the compression step 320 comprises applying the axial compression force 92 on the two axial ends of the outer portion 2b. The axial compression force 92 is applied, for example, by a pressing device (not illustrated in Figure 3) which is in contact with the two axial ends of the outer portion 2b. The pressing device is not in contact with the two axial ends of the inner portion 2a. The pressing device is preferably a clamping device 71, as illustrated in Figure 6.

Figure 6 illustrate one of the pockets 60 in which a pressing portion of the clamping device 71 is inserted so as to apply the axial compression force 92. As mentioned above, each tooth of the teeth 21 corresponds to two end plates 6 located at the two axial sides of the tooth. Figure 6 only illustrates one of the two axial sides of the tooth, wherein only one of the pockets 60 is described.

The pocket 60 is a cavity between the corresponding end plate 6 and an area of an outer portion of the corresponding tooth belonging to the outer portion 2b of the stack of laminations.

According to an embodiment, the compression step 320 comprises, for each tooth of the teeth 21, inserting in each of the pockets 60 of the two end plates 6 a pressing portion of the clamping device 71, and using the clamping device 71 to apply the axial compression force 92 on the areas of the outer portions of the tooth belonging to the outer portion 2b of the stack of laminations.

The winding assembly and fixation step 330, consisting of winding the field coil 3 on the compressed outer portion 2b, as illustrated in Figure 4. More precisely, the field coil 3 is wound on each tooth of the teeth 21 of the compressed outer portion 2b.

The winding assembly and fixation step 330 further comprises removing the axial compression force 92 after the field coil 3 is wound on the lamination package. For example, the pressing device is removed after the field coil 3 is wound on the outer portion 2b of the lamination package. The removal of the axial compression force 92 leads that the inner portion 2a and the outer portion 2b tend to return to their original status where the compression step 320 has not been performed yet. Therefore, such a pretension resulting from the axial compression force 92 makes the field coil 3 be precisely and firmly wound on the outer portion 2b.

Then, after the field coil 3 is wound and the axial compression force 92 is removed, a pretension 95 of the field coil 3 ensures that the field coil 3 is precisely and firmly wound on each tooth of the teeth 21 of the lamination package of the rotor body 2, as illustrated in Figure 4.

The rotor assembly method according to the invention allows thus to precisely and firmly wind a field coil around each tooth of the teeth of the lamination package. The risk of mispositioning the field coil on the rotor body occurred in the rotor assembly phase or during operation of the rotor, is significantly reduced or completely avoided.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor assembly method (300), comprising:
- an assembly step (310) configured to install on a rotor shaft (4) of a rotor (1), a lamination package formed of a stack of laminations, wherein the stack of laminations comprises an inner portion (2a) and an outer portion (2b) which is, compared to the inner portion (2a), more distant to the rotor shaft (4);
- a compression step (320) consisting of compressing the outer portion (2b) by an axial
compression force (92) to form a compressed outer portion (2b); **characterised in that** it further comprises
- a winding assembly and fixation step (330) comprising winding a field coil (3) on the compressed outer portion (2b), and removing the axial compression force (92) after the field coil (3) is wound.

2. The rotor assembly method (300) according to the preceding claim, wherein the compression step (320) comprises applying the axial compression force (92) on two axial ends of the outer portion (2b).

3. The rotor assembly method (300) according to the preceding claim, wherein the compression step (320) comprises using a pressing device to apply the axial compression force (92); the pressing device being then removed after the winding assembly and fixation step (330).

4. The rotor assembly method (300) according to the preceding claim, wherein:
- the rotor (1) comprises end plates (6), and the end plates (6) comprise each a pocket (60); each of the pockets (60) facing a tooth of the teeth (21) of the stack of laminations, wherein the pocket (60) is a cavity between the corresponding end plate (6) and an area of an outer portion of the corresponding tooth belonging to the outer portion (2b) of the stack of laminations; each tooth of the teeth (21) corresponding to two end plates (6) located at two axial sides of the tooth;
- the pressing device is a clamping device (71);
- the compression step (320) comprises, for each tooth of the teeth (21), inserting in each of the pockets (60) of the two end plates (6) a pressing portion of the clamping device (71), and using the clamping device (71) to apply the axial compression force (92) on the areas of the outer portions of the tooth belonging to the outer portion (2b) of the stack of laminations.

5. A rotor (1) being manufactured by using a rotor assembly method (300) according to any one of the preceding claims.

6. The rotor (1) according to the preceding claim, being an electric excited rotor for an electrically excited synchronous motor (EESM).

## Patentansprüche

1. Rotormontageverfahren (300), umfassend:
- einen Montageschritt (310), der dazu ausgelegt ist, auf einer Rotorwelle (4) eines Rotors (1) ein Lamellenpaket zu installieren, das aus einem Stapel von Lamellen gebildet ist, wobei der Stapel von Lamellen einen inneren Abschnitt (2a) und einen äußeren Abschnitt (2b), der im Vergleich zu dem inneren Abschnitt (2a) weiter von der Rotorwelle (4) entfernt ist, umfasst;
- einen Kompressionsschritt (320), der darin besteht, den äußeren Abschnitt (2b) durch eine axiale Kompressionskraft (92) zu komprimieren, um einen komprimierten äußeren Abschnitt (2b) zu bilden; **dadurch gekennzeichnet, dass** er ferner umfasst
- einen Wickelmontage- und Befestigungsschritt (330), der das Wickeln einer Feldspule (3) auf den komprimierten äußeren Abschnitt (2b) und das Aufheben der axialen Kompressionskraft (92) nach dem Wickeln der Feldspule (3) umfasst.

2. Rotormontageverfahren (300) nach dem vorhergehenden Anspruch, wobei der Kompressionsschritt (320) das Aufbringen der axialen Kompressionskraft (92) auf zwei axiale Enden des äußeren Abschnitts (2b) umfasst.

3. Rotormontageverfahren (300) nach dem vorhergehenden Anspruch, wobei der Kompressionsschritt (320) das Verwenden einer Pressvorrichtung umfasst, um die axiale Kompressionskraft (92) aufzubringen; wobei die Pressvorrichtung dann nach dem Wickelmontage- und Befestigungsschritt (330) entfernt wird.

4. Rotormontageverfahren (300) nach dem vorhergehenden Anspruch, wobei:
- der Rotor (1) Endplatten (6) umfasst, und die Endplatten (6) jeweils eine Tasche (60) umfassen; wobei jede der Taschen (60) einem Zahn der Zähne (21) des Stapels von Lamellen zugewandt ist, wobei die Tasche (60) ein Hohlraum zwischen der entsprechenden Endplatte (6) und einem Bereich eines äußeren Abschnitts des entsprechenden Zahns ist, der zu dem äußeren Abschnitt (2b) des Stapels von Lamellen gehört; wobei jeder Zahn der Zähne (21) zwei Endplatten (6) entspricht, die sich an zwei axialen Seiten des Zahns befinden;
- die Pressvorrichtung eine Klemmvorrichtung (71) ist;
- der Kompressionsschritt (320) für jeden Zahn der Zähne (21) das Einsetzen eines Pressabschnitts der Klemmvorrichtung (71) in jede der Taschen (60) der zwei Endplatten (6) und das Verwenden der Klemmvorrichtung (71), um die axiale Kompressionskraft (92) auf die Bereiche der äußeren Abschnitte des Zahns auszuüben, die zu dem äußeren Abschnitt (2b) des Stapels von Lamellen gehören, umfasst.

5. Rotor (1), der durch Verwendung eines Rotormontageverfahrens (300) nach einem der vorhergehenden Ansprüche hergestellt ist.

6. Rotor (1) nach dem vorhergehenden Anspruch, der ein elektrisch erregter Rotor für einen elektrisch erregten Synchronmotor (EESM) ist.

## Revendications

1. Procédé d'assemblage de rotor (300), comprenant :
- une étape d'assemblage (310) configurée pour installer sur un arbre de rotor (4) d'un rotor (1), un paquet de stratifications formé d'un empilement de stratifications, l'empilement de stratifications comprenant une portion interne (2a) et une portion externe (2b) qui est, comparée à la portion interne (2a), plus distante de l'arbre de rotor (4) ;
- une étape de compression (320) consistant à comprimer la portion externe (2b) par une force de compression axiale (92) pour former une portion externe comprimée (2b) ; **caractérisé en ce qu'**il comprend en outre
- un ensemble d'enroulement et une étape de fixation (330) comprenant l'enroulement d'une bobine de champ (3) sur la portion externe comprimée (2b), et le retrait de la force de compression axiale (92) après que la bobine de champ (3) a été enroulée.

2. Procédé d'assemblage de rotor (300) selon la revendication précédente, dans lequel l'étape de compression (320) comprend l'application de la force de compression axiale (92) sur deux extrémités axiales de la portion externe (2b).

3. Procédé d'assemblage de rotor (300) selon la revendication précédente, dans lequel l'étape de compression (320) comprend l'utilisation d'un dispositif de pression pour appliquer la force de compression axiale (92) ; le dispositif de pression étant ensuite retiré après l'étape de fixation et d'assemblage d'enroulement (330) .

4. Procédé d'assemblage de rotor (300) selon la revendication précédente, dans lequel :
- le rotor (1) comprend des plaques d'extrémité (6), et les plaques d'extrémité (6) comprennent chacune une poche (60) ; chacune des poches (60) faisant face à une dent des dents (21) de l'empilement de stratifications, la poche (60) étant une cavité entre la plaque d'extrémité correspondante (6) et une zone d'une portion externe de la dent correspondante appartenant à la portion externe (2b) de l'empilement de stratifications ; chaque dent des dents (21) correspondant à deux plaques d'extrémité (6) situées au niveau de deux côtés axiaux de la dent ;
- le dispositif de pression est un dispositif de serrage (71) ;
- l'étape de compression (320) comprend, pour chaque dent des dents (21), l'insertion dans chacune des poches (60) des deux plaques d'extrémité (6) d'une portion de pression du dispositif de serrage (71), et l'utilisation du dispositif de serrage (71) pour appliquer la force de compression axiale (92) sur les zones des portions externes de la dent appartenant à la portion externe (2b) de l'empilement de stratifications.

5. Rotor (1) étant fabriqué à l'aide d'un procédé d'assemblage de rotor (300) selon l'une quelconque des revendications précédentes.

6. Rotor (1) selon la revendication précédente, étant un rotor électrique excité pour un moteur synchrone à excitation électrique (EESM).
